# EUROPEAN PATENT APPLICATION

(11) **EP 0 780 611 A1**
(43) Date of publication of application: **25.06.1997**
(21) Application number: 96308755.6
(22) Date of filing: 04.12.1996
(51) Int. Cl.: F16K 7/16

(54) **Flow control valve**

(30) Priority: 22.12.1995 US 579083
(71) Applicant: APPLIED MATERIALS, INC., Santa Clara, California 95054-3299 (US)
(72) Inventor: Kaczorowski, Edward M., Saratoga, California 95070 (US); Manofsky, William J. R., San Jose, California, 95121 (US); Wilmer, Michael E., California, 94028 (US)
(74) Representative: Bayliss, Geoffrey Cyril

(57) **Abstract**

An improved flow control valve assembly is disclosed. In one embodiment, the present invention comprises a body assembly having a cavity disposed therein. The body further comprises an inlet passage and an outlet passage to permit a fluid or gas flow into or out of the valve cavity. The inlet and outlet passages include openings into the valve cavity. Disposed between the inlet and outlet openings is a curved surface. A fluid or gas flow is controlled through the valve by incrementally engaging a thin, flexible diaphragm along the curved surface of the body to vary the fluid flow resistance between the diaphragm and curved surface.

## Description

The present invention relates generally to fluid and gas valve assemblies. More particularly, the invention relates to a flow control valve assembly wherein fluid or gas flow is controlled by incrementally wrapping a diaphragm along a surface disposed between inlet and outlet openings to vary the fluid flow resistance between the openings.

It is known that in many industrial processes it is necessary to control the flow of fluids and process gases. In many industries, including the semiconductor, pharmaceutical and nuclear industries, to name a few, process gases and fluids delivered to point-of-use locations must be of high purity and must be particle free. In order to illustrate the need for systems that are capable of delivering highly pure and particle free gases and fluids, this discussion will mainly be limited to those needs associated with semiconductor processing. It will be recognized, however, that such focus is for descriptive purposes only and that the apparatus of the present invention are applicable to any gas or fluid delivery system.

As previously discussed, the provision of high purity gas and fluid streams are critically important in a wide variety of industrial applications. For example, the rapid expansion of chemical vapor deposition and etching techniques in the semiconductor industry has been associated with the deployment and use of manufacturing equipment that is totally reliant on the delivery of ultra-high purity process gases at the point of use in the semiconductor manufacturing facility. For high purity gas operations, it is essential that the process gases be delivered to the point of use with minimum contamination since even parts-per-billion impurity levels can adversely effect the efficiency of semiconductor and other high purity products.

As previously discussed, in many applications it is important to control the amount and the rate of delivery of gases or fluids to point-of-use locations. Particularly, in semiconductor processing it has become increasingly important to control the specific mass of gases delivered during the fabrication of semiconductor devices. As the speed of next generation semiconductor devices increases and the size/dimension of next generation semiconductor devices decreases the degree of accuracy and control over the fabrication of next generation semiconductor devices must increase.

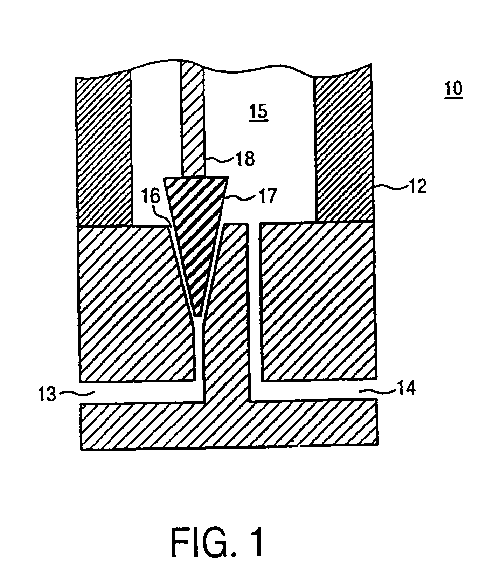

Conventional flow control valves come in several forms. One prior art method for controlling the flow of a gas or liquid is a needle valve. Figure 1 illustrates a conventional needle flow control valve assembly 10. As shown in Figure 1, the valve body 12 contains an inlet passage 13 and an outlet passage 14 leading into and out of a cavity 15 disposed within valve body 12. Note that inlet passage 13 opens into an elongated, tapered region 16. The elongated, tapered region opens into cavity 15 and is shaped to accommodate an elongated and tapered valve element 17. The flow of gas or liquid is controlled by adjusting the position of valve element 17 within region 16. Valve element 17 is positioned by the upward or downward movement of stem 18.

One problem associated with using a needle valve to control flow is that the valve element tends to rub against the side walls of region 16 creating particles that are released into the gas or fluid system. As noted earlier, in some applications, such as ultra-clean semiconductor applications, the delivery of high purity gas streams is critically important. For example, the growth of high quality thin film electronic and optoelectronic cells by chemical vapor deposition or other vapor based techniques is inhibited by impurities within the gas delivery system. These impurities can cause defects that reduce yields by increasing the number of rejects, which can be very expensive.

One problem associated with needle valves is that they typically require polymer seals at the valve body and stem interface. Because of their susceptibility to corrosion and outgassing, the use of polymer seals is unacceptable, especially in those systems delivery corrosive gasses or fluids.

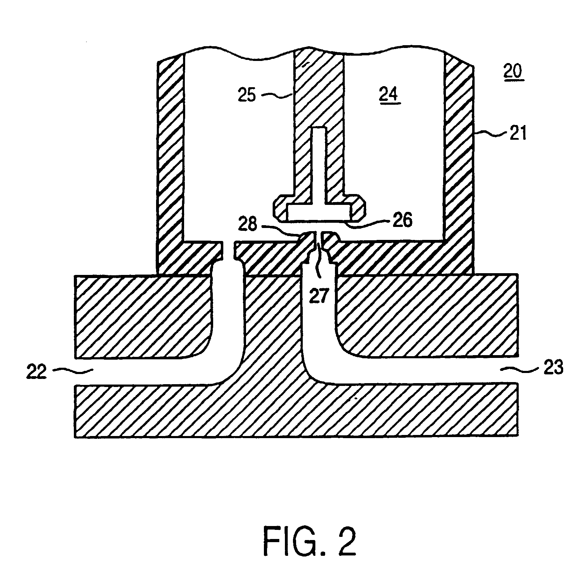

Figure 2 illustrates another prior art valve assembly that is commonly used to control the flow rates in gas and fluid systems. The valve assembly of Figure 2 is often found in mass flow controllers that control the flow of gas into semiconductor processing chambers. As shown in Figure 2, the valve assembly 20 includes a body 21 containing an inlet passage 22 and an outlet passage 23 leading into and out of a cavity 24 disposed within valve body 21. Outlet passage 22 includes an orifice 27 having a raised lip 28 at the cavity opening. The valve assembly 20 includes a plunger assembly 25 containing a valve seat 26. The valve seat 26 is attached to the end of the plunger 25 and is moved from a closed position to a position within close proximity to lip 28 during operation to control the flow of gas through orifice 27. Whereas needle valves are considered variable orifice, the valve assembly 20 of Figure 2 is considered a fixed orifice flow control device.

There are a number of problems associated with the prior art assembly of Figure 2. First, there exists a limited degree of accuracy due to an inherent inability to achieve the same flow conditions in a repeatable fashion. In the valve assembly of Figure 2 a very small movement of plunger 26 causes a large change in the flow rate. In addition, minor changes in the valve temperature can result in the expansion of plunger 26 and/or body 21. An expansion of plunger 26 or body 21 will affect the flow opening of orifice 27, which will in turn create a change in the flow rate passing through the valve. The valve assembly of Figure 2 also has a limited flow control range. For example, valve assembly 20 is typically limited to applications wherein the minimum controlled flow rates cann6t fall below ten percent (10%) of maximum scale. When the valve operates outside the designated control range, the accuracy level of the valve diminishes greatly. This introduces a problem in those applications where it is desirable to control a gas into a process chamber at a low flow rate at the beginning of the process and a much larger flow at the end of the process (or vice versa). Hence, in order to achieve variable flow rates within a prescribed process recipe using the flow control apparatus of Figure 2, multiple control valves possessing different sized orifices are required. It is appreciated that the present methods of controlling gas and fluid flows inhibit the optimization of flow rates to increase process productivity.

What is needed then is an apparatus which solves the problems associated with controlling the flow of gases and fluids to point-of-use locations. As will be seen, the present invention provides an improved flow control valve which solves the aforementioned problems.

An improved flow control valve assembly is disclosed. In one embodiment, the present invention comprises a body assembly having a cavity disposed therein. The body further comprises an inlet passage and an outlet passage to permit a fluid or gas flow into or out of the valve cavity. The inlet and outlet passages include openings into the valve cavity. Disposed between the inlet and outlet openings is a substantially continuous surface. A fluid or gas flow is controlled through the valve by incrementally engaging a thin, flexible diaphragm along the surface of the body such that the fluid flow resistance between the diaphragm and surface is varied.

In another embodiment the surface of the body is textured to provide a desired fluid flow resistance between the surface and the diaphragm as the diaphragm wraps along the surface.

In yet another embodiment, specific geometric depressions are formed within the surface of the body to provide a desired fluid flow resistance between the surface and the diaphragm as the diaphragm incrementally engages along the surface.

The present invention is illustrated by way of example and is not limited by the figures of the accompanying drawings, in which like references indicate similar elements, and in which:

**Figure 1** illustrates a prior art flow control valve.

**Figure 2** illustrates another prior art flow control valve.

**Figure 3A** illustrates a cross-sectional view of a flow control valve in one embodiment of the present invention.

**Figure 3B** illustrates an enlarged cross-sectional view of the diaphragm, curved surface and plunger region of the flow control valve depicted in Figure 3A.

**Figure 3C** illustrates a perspective view of the curved surface depicted in Figure 3A.

**Figure 4A** illustrates the flow control valve of Figure 3A with the diaphragm partially engaged along the curved surface of the lower body assembly.

**Figure 4B** illustrates an enlarged cross-sectional view of the diaphragm, curved surface and plunger region of the flow control valve depicted in Figure 4A.

**Figure 4C** illustrates a microscopic cross-sectional view of a contact area between the curved surface and diaphragm of Figure 4A.

**Figure 5A** illustrates a cross-sectional view of a flow control valve in another embodiment of the present invention.

**Figure 5B** illustrates a perspective view of the surface depicted in Figure 5A.

**Figure 6** illustrates the flow control valve of Figure 5A with the diaphragm partially engaged along the flat surface of the lower body assembly.

**Figure 7** illustrates a cross-sectional view of a flow control valve in yet another embodiment of the present invention.

**Figure 8A** illustrates a perspective view of the lower body assembly of the valve depicted in Figure 7 having depressions formed within the curved surface.

**Figure 8B** illustrates a cross-sectional view of a depression depicted in Figure 8A along line 8B-8B.

**Figure 8C** illustrates a cross-sectional view of a depression depicted in Figure 8A along line 8C-8C.

**Figure 9A** illustrates a perspective view of the lower body assembly of the valve depicted in Figure 7 wherein the curved surface is textured.

**Figure 9B** illustrates a cross-sectional view of the textured surface depicted in Figure 9A along line 9B-9B.

**Figure 9C** illustrates a cross-sectional view of the textured surface depicted in Figure 9A along line 9C-9C.

**Figure 10** illustrates the flow control valve of Figure 7 having a ridge bounding the inlet orifice opening.

**Figure 11** illustrates a cross-sectional view of a flow control valve in yet another embodiment of the present invention.

An improved flow control valve described. In the following description, numerous specific details are set forth, such as material types, dimensions, etc., in order to provide a thorough understanding of the present invention. However, it will be obvious to one of ordinary skill in the art that the invention may be practiced without these specific details. In other instances, well-known structures and processing steps have not been shown in particular detail in order to avoid unnecessarily obscuring the present invention. Additionally, it should be noted that throughout this discussion reference will be made to a variety of components in a fluid delivery system. For the purposes of this discussion, and any preceding discussion made herewith, the term "fluid" includes any gas, liquid, or other media that is capable of flowing through a valve assembly.

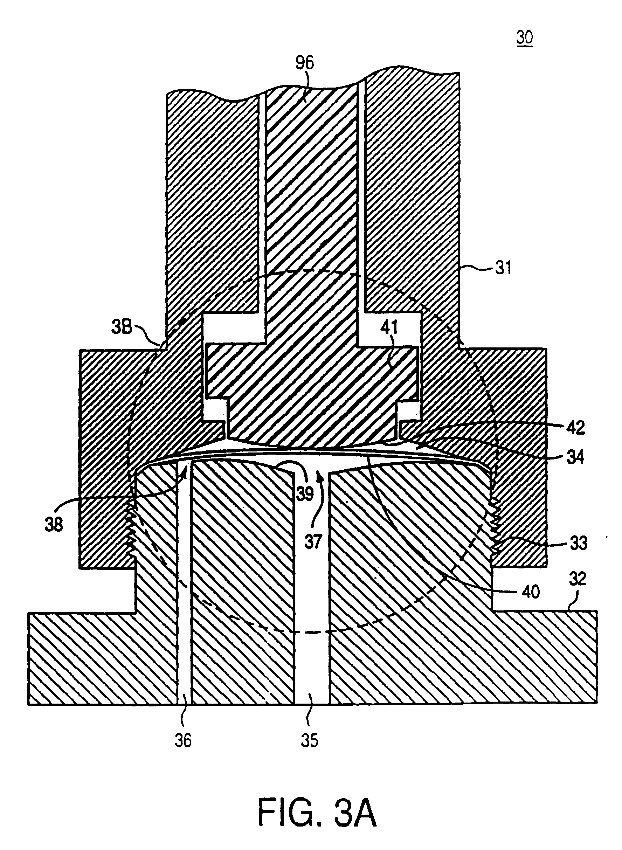

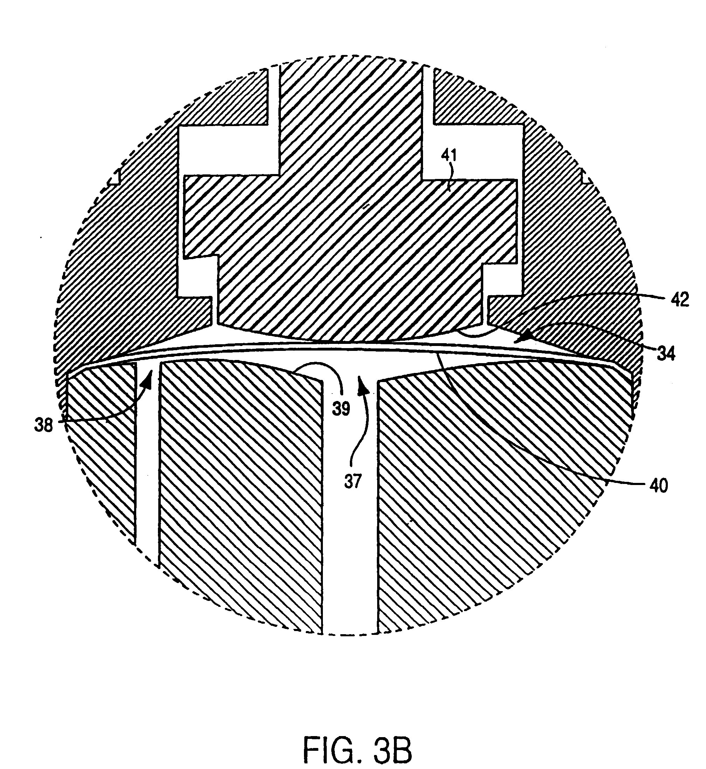

With reference to Figure 3A, a cross-sectional side view of one embodiment of the present invention is shown. As illustrated in Figure 3A, the valve assembly 30 includes a lower body assembly 32 containing an inlet passage 35 and an outlet passage 36 leading into and out of a cavity 34 disposed between the lower body assembly 32 and an upper body assembly 31. The inlet and outlet passages 35 and 36 communicate with cavity 34 at an inlet opening 37 and an outlet opening 38, respectively. Disposed between inlet and outlet openings 37 and 38 is a curved surface 39 which defines the lower wall of cavity 34. A flexible diaphragm 40 is disposed within cavity 34 and is secured between upper and lower body assemblies 31 and 32. A fluid flow passing through valve assembly 30 is controlled by incrementally engaging or disengaging diaphragm 40 along curved surface 39 to thereby restrict or free the flow of fluid through the valve cavity. In the embodiment of Figure 3A, a plunger 41 is provided within upper body assembly 31 to adjust the position of diaphragm 40. Note also, that upper and lower body assemblies 31 and 32 are attached via threaded members 33.

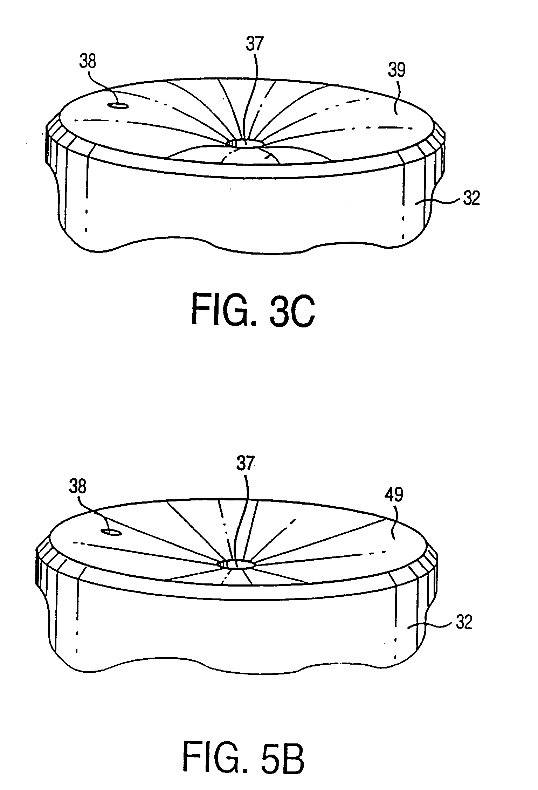

Figure 3B illustrates an enlarged cross-sectional view of the diaphragm 40, curved surface 39, and plunger engagement surface 42 of the embodiment shown in Figure 3A. Figure 3C illustrates a perspective view of surface 39.

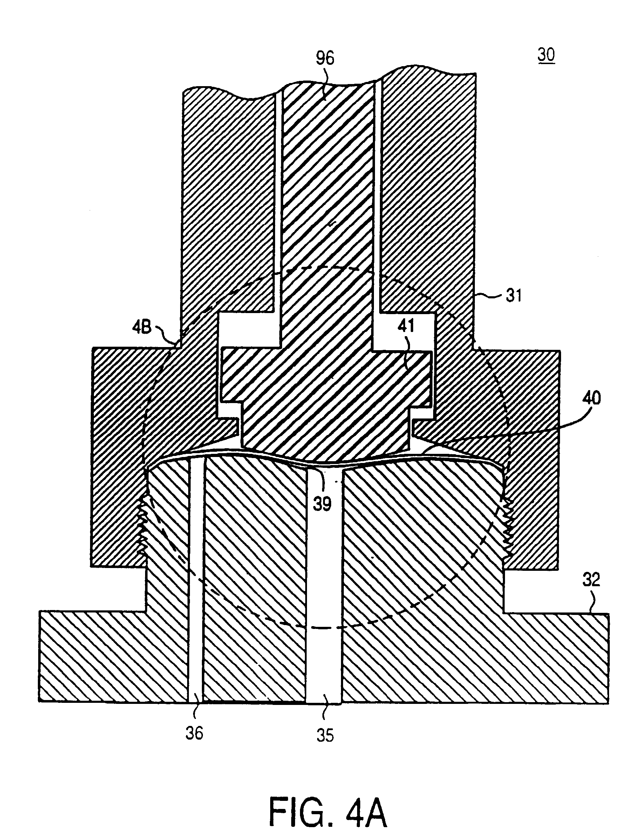

It should be noted that Figures 3A and 3B illustrate diaphragm 40 in a fully disengaged position wherein the fluid flow resistance between diaphragm 40 and surface 39 is at a minimum. Figure 4A, on the other hand, illustrates the valve assembly of Figure 3A with diaphragm 40 partially engaged along curved surface 39. Hence, in Figure 4A, fluid flow is restricted through cavity 34. One of the salient features of the present invention lies in the method in which flow is controlled through the valve assembly. The flow control method of the present invention is achieved by incrementally engaging or wrapping diaphragm 40 along curved surface 39 to adjust the fluid flow resistance between the diaphragm and curved surface.

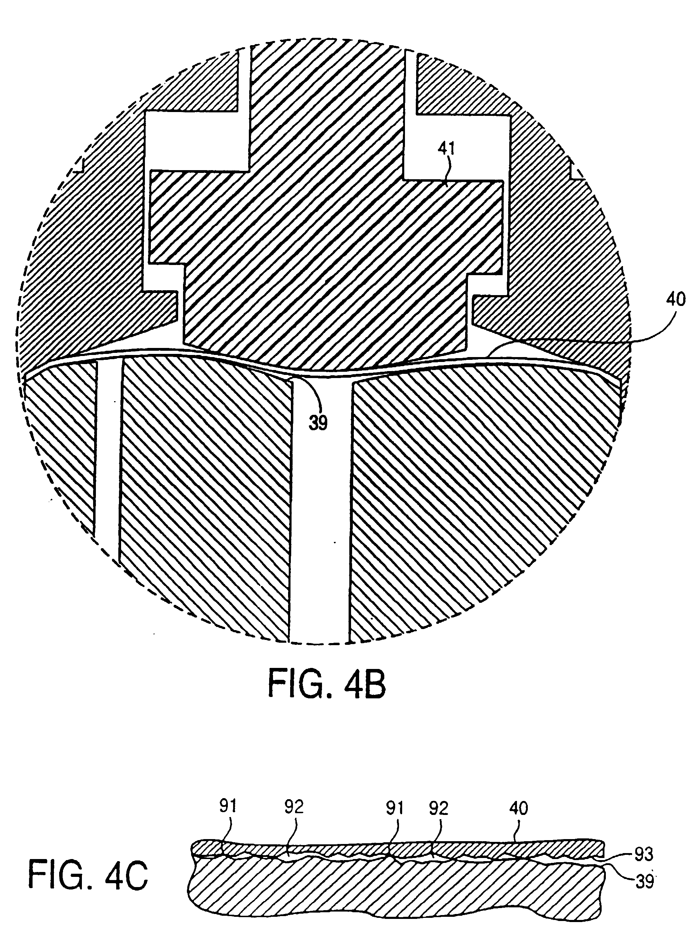

Figure 4B illustrates an enlarged cross-sectional view of the diaphragm, curved surface and plunger region of the flow control valve depicted in Figure 4A. As shown in Figure 4B, the contact surface area between surface 39 and diaphragm 40 is increased as a downward force is applied to plunger 41. It is appreciated that as the contact surface area between surface 39 and diaphragm 40 increases so will the fluid flow resistance between the two members. In this manner fluid flow is controlled in the present invention by incrementally wrapping or enveloping diaphragm 40 along surface 39 such that the fluid flow resistance between the two members is varied. In the flow control valve assembly of Figure 3A, the fluid flow resistance between diaphragm 40 and surface 39 is at a minimum since diaphragm 40 makes little or no contact with surface 39. As a result, the flow rate through cavity 34 is at a maximum when diaphragm 40 is in a fully disengaged position. In the flow control valve assembly depicted in Figure 4B, the flow rate through cavity 34 is reduced as diaphragm 40 envelops surface 39.

Figure 4C illustrates a microscopic view of a contact area between curved surface 39 and diaphragm 40 of Figure 4B. It is appreciated by those of ordinary skill in the art that few, if any, surfaces are truly flat. Even polished surface contain crevices, protuberances and other surface deformations. The depth, width and height of the deformations will, of course, depend upon the particular surface finish. For example, a surface having a 16 RA (Roughness Average) will, on average, contain fewer deformations than a surface possessing a 25 RA surface finish. It is further . understood that, on average, the deformations in a surface having a 16 RA surface finish are more shallow, more narrow and shorter than those in a surface possessing a 25 RA surface finish.

Turning again to Figure 4C, diaphragm 40 is shown in intimate contact with surface 39. Figure 4C represents a typical cross-section of a contact area that exists between diaphragm 40 and surface 39 as diaphragm 40 wraps along or envelops surface 39. Surface 93 of diaphragm 40 and surface 39 each contain deformations along their respective surface. Consequently, when the two surfaces come into contact, a series of contact points 91 and voids 92 are formed along the contact interface. Because surface 93 and 39 fail to make complete contact along the contact interface, a fluid flow is permitted to pass through voids 93. The amount of fluid flow that is permitted to pass between the two surfaces is determined by a number of factors including: the open area between diaphragm 40 and surface 39, the surface finish of surfaces 93 and 39, the flexibility of diaphragm 40, the properties of the fluid passing through the interface, the differential pressure across the interface, etc.. For example, as the contact area between surfaces 93 and 39 increases, an increased number of restrictions (contact points 91) will exists which will effectively increase the fluid flow resistance between the two surfaces. Conversely, as the surface roughness of surface 93 and 39 is increased, larger voids and fewer contact points will exists along the interface. This will result in a lower fluid flow resistance between the two surfaces. It is appreciated that as the fluid flow resistance between diaphragm 40 and surface 39 increases, the flow rate between the two members will decrease (assuming other parameters, such as pressure and temperature, remain constant). On the other hand, as the fluid flow resistance between diaphragm 40 and surface 39 decreases, the flow rate between the two members will increase.

In one embodiment, the entire valve assembly as depicted in Figure 3A comprises stainless steel. Note, however, that any of a number of other metals, ceramics, etc. may be used depending upon the application and particular use of the control valve. The shape and size of inlet and outlet openings 37 and 38 will also vary depending upon the particular application. In one embodiment, inlet passage 35 has a substantially circular cross-section with a diameter of approximately 0.15 inches. Outlet passage 36 also possesses a substantially circular cross-section with a diameter of approximately 0.10 inches. The curvature and surface finish of surface 39 is dependent upon a variety of factors including flow rate and control requirements. In one embodiment, the curvature of surface 39 has a radius of approximately 2.5 inches. The surface finish of surface 39 is typically held to a 16 RA (Roughness Average) finish or better. Diaphragm 40 typically includes a thin metal disc having a thickness of approximately 0.005 inches and a curvature that is slightly larger than the curvature of surface 39. For example, in an embodiment where surface 39 possesses a curvature having a diameter of 2.5 inches, diaphragm 40 may possess a curvature having a diameter of approximately 2.75 to 3.0 inches. It should be understood that a non-metallic diaphragm, such as a polymer, may be used in valves controlling compatible, low temperature fluids. A metallic diaphragm, and more particularly, a stainless steel diaphragm, is used in high temperature and corrosive fluid flow environments. The surface finish or porousness of diaphragm 40 will also depend upon flow rate and control requirements.

As previously discussed, upper body assembly 31 possesses a plunger assembly that is used to forcibly engage diaphragm 40 along surface 39 to control the flow rate of a fluid through valve assembly 30. The size and shape of plunger 41 and plunger engagement surface 42 may take many forms and will depend upon the particular design requirements. In one embodiment plunger surface 42 has a substantially circular shape and includes a curvature having a diameter of approximately 2.25 inches as measured from the center line of the plunger assembly. Generally, upper body assembly 31 and stem 96 of plunger 41 each possess threaded members (not shown) that engage to provide an upward or downward movement of plunger 41 when the stem is rotated relative to upper body assembly 31. Stem 96 may be rotated manually or by any of a number of other means commonly known in the art, such as, for example, an electric motor.

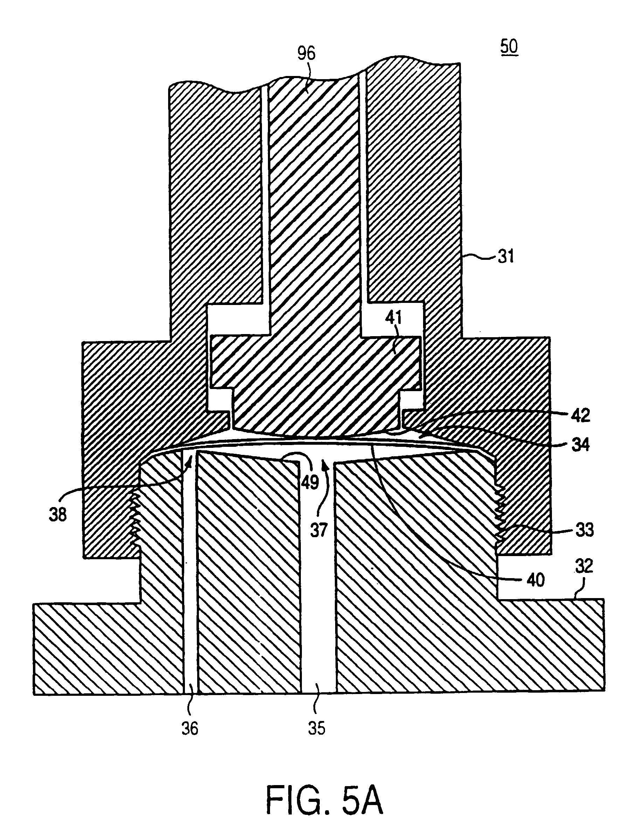

Figure 5A illustrates a cross-sectional view of another embodiment of the present invention. The distinction between valve assembly 30 of Figure 3A and valve assembly 50 of Figure 5A lie in the shape of lower body assembly contact surfaces 39 and 49. Figure 5B illustrates a perspective view of surface 49. In the embodiment of Figure 3A, surface 39 is curved, whereas in the embodiment of Figure 5A surface 49 is conical. (See Figures 3B and 5B.) Although the shape of surfaces 39 and 49 differ, the method of operation of valve assemblies 30 and 50 remain essentially the same. Fluid flow through the valve cavity 34 is controlled by incrementally engaging diaphragm 40 along surface 49. In Figure 5A, plunger assembly 41 and plunger engagement surface 42 is shown having the same shape as the embodiment depicted in Figure 3A. Note, however, that a plunger assembly having a substantially conical engagement surface may also be used. As previously discussed, plunger engagement surface 42 may take upon a wide variety of shapes and sizes. The shape of surface 42 will largely depend upon the shape of surface 49, and will also be affected by the material characteristics of diaphragm 40 and the particular flow requirements of the valve assembly.

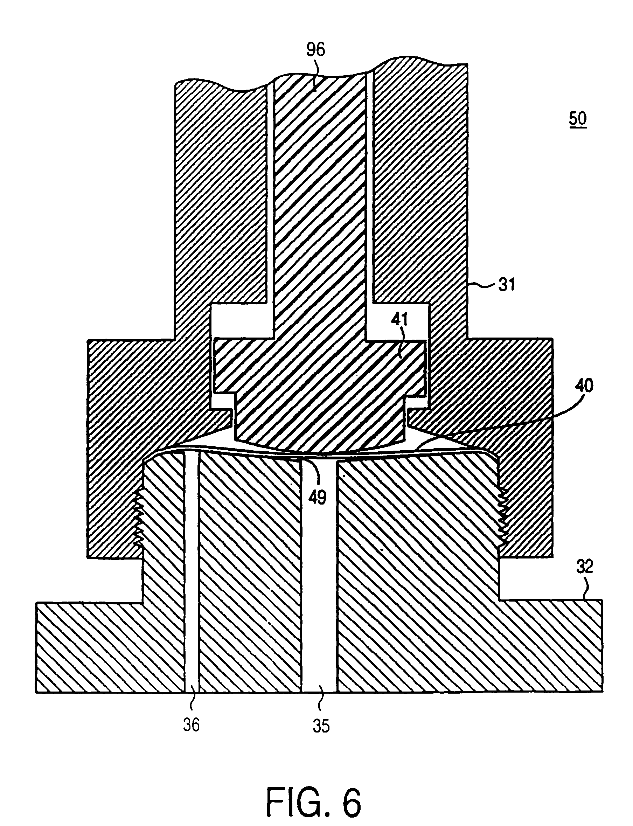

Figure 6 illustrates the valve assembly 50 of Figure 5A with diaphragm 40 partially engaged along the flat surface 49 of lower body assembly 32. Flow is restricted through cavity 34 in the same manner described above in the embodiment of Figure 4A.

It is important to note that in Figure 4A and Figure 6 diaphragm 40 is shown making continuous contact along surfaces 39 and 49 as it incrementally engages the surfaces. Note, however, that this type of engagement is not essential to the implementation of the present invention. In some applications, the contact area or contact points between diaphragm 40 and surfaces 39 and 49 will shift along the surfaces as the engagement position of diaphragm 40 changes.

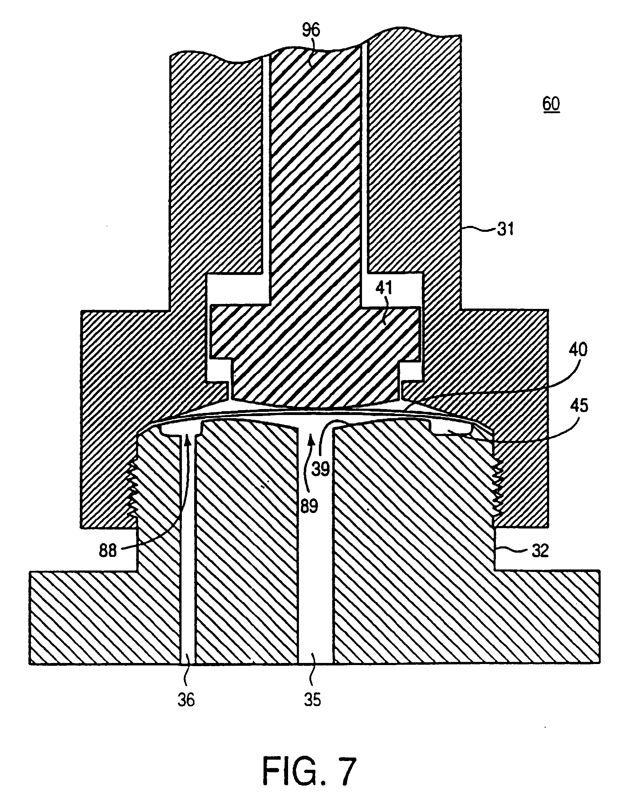

Referring now to Figure 7, a cross-sectional view of another embodiment of the present invention is shown. As shown, valve assembly 60 is similar to the embodiment illustrated in Figure 3A except for the addition of annular recess 45 in lower body assembly 32. Recess 45 may be included in the valve assembly to equalize the flow distribution across surface 39 and to facilitate higher flow rates if needed. In one embodiment, recess 45 comprises a substantially rectangular cross-section having a depth and width of approximately 0.025 and 0.15 inches, respectively. It is understood, however, that recess 45 may take different sizes and shapes. For example, in lieu of a rectangular cross-section, recess 45 may include a semi-circular shape having a diameter of 0.025 inches.

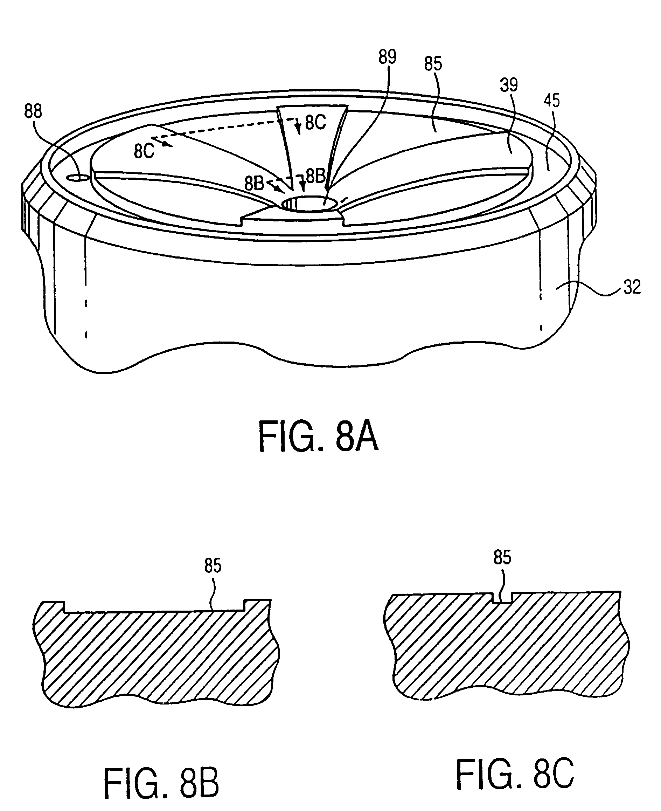

In the foregoing description a number of embodiments of the present invention have been described wherein the lower body assembly contact surfaces 39 (Figures 3A, 3B, 4A and 7) and 49 (Figures 5A, 5B and 6) have uniform and continuous surface finishes. In some applications where flow must be controlled over a large range of flow rates, the use of a contact surface having a uniform and continuous surface finish may prove to be insufficient. For example, in a flow control valve having a flow regime between 5 liters/minute and 10 sccm, the ability to control flow at the high end of the flow regime is difficult when utilizing a contact surface having a uniform and continuous surface finish. Figure 8A illustrates an altemative embodiment of the lower body assembly 32 depicted in Figure 7 that provides a higher degree of control at higher flow rates. As shown, surface 39 includes a plurality of rectangular shaped depressions 85 disposed equidistantly around surface 39. As describe above, flow is primarily controlled by varying the fluid flow resistance between diaphragm 40 and surface 39. In the embodiment of Figure 8A, fluid flow resistance is controlled by establishing a maximum obtainable contact area between diaphragm 40 and surface 39 as the diaphragm engages radially along surface 39. As shown in Figure 8A, the maximum obtainable contact area between diaphragm 40 and surface 39 increases as diaphragm 40 engages radially inward along surface 39. The advantage of including depressions 85 in surface 39 are most notable when attempting to control high flow rates. Without the depression regions, the flow rate between diaphragm 40 and surface 39 is drastically reduced when diaphragm 40 makes initial contact along the outer edge of surface 39. By including depressions 85 in surface 39 higher flow rates may be maintained during the initial engagement and subsequent wrapping of diaphragm 40 along surface 39. Control at the higher flow rates is obtained due to the existence of voids formed between diaphragm 40 and surface 39 at depression regions 85. Figures 8B and 8C illustrate a cross-sectional view of depression 85 along lines 8B-8B and 8C-8C, respectively. In one embodiment depression zone 85 comprises a substantially triangular shape having a depth of 0.01 inches and a width of 0.10 inches at its widest point, and a width of 0.005 inches at its most narrow point. It is understood, however, that the size, shape and depth of depression regions 85 will vary depending upon the particular flow requirements. By way of example, deeper, more narrow depression regions may be used in lieu of those illustrated in Figure 8A. Channels having a constant width and varying depth may also be used. Note also, that raised regions rather than depressions may be formed along surface 39 in order to achieve similar results. As an example, a raised rib pattern or a variety of other geometric patterns may be formed along surface 39.

Another important advantage of utilizing depression regions is that they may be used to produce a linear flow control over a broad range of flow rates. Linear flow control may be accomplished by strategically placing specifically sized and shaped depression zones along surface 39 such that the fluid flow resistance between diaphragm 40 and surface 39 changes linearly as diaphragm 40 engages along surface 39.

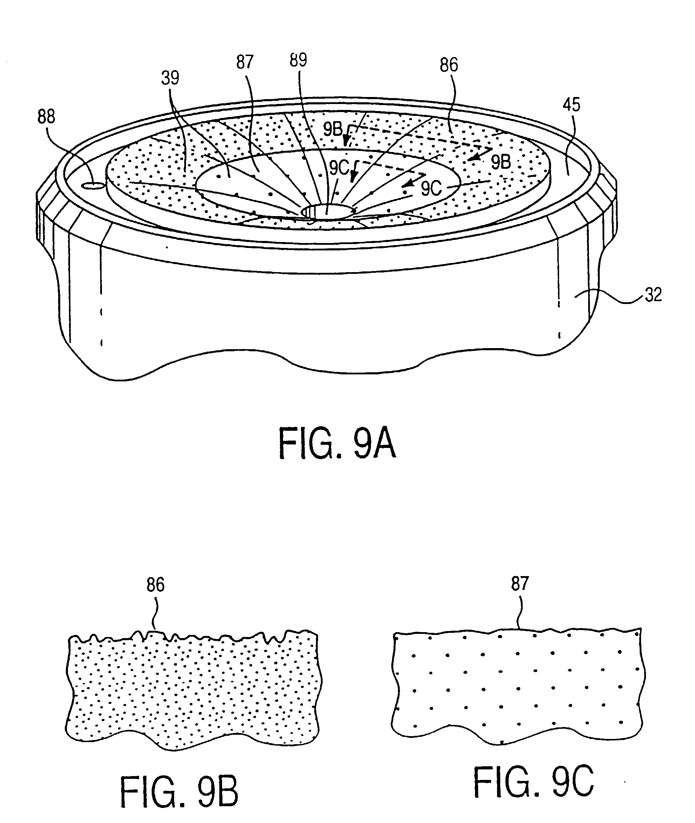

Figure 9A illustrates another embodiment of the lower body assembly depicted in Figure 7. As shown in Figure 9A, surface 39 is textured to provide a particular surface roughness along various regions of surface 39. In Figure 9A, surface 39 is shown having two textured regions 86 and 87, wherein each region possesses a different surface roughness. In one embodiment the surface roughness along outer region 86 is greater than the surface roughness along inner region 87. Figures 9B and 9C illustrate a cross-sectional view of surface 39 along lines 9B-9B and 9C-9C, respectively. By providing a plurality of textured regions that are disposed radially along surface 39, flow may be more precisely controlled over a broader range of flow rates. This is achieved by effectively controlling the number of contact points and voids that are established between diaphragm 40 and surface 39 as the two members make contact. Although two textured regions are shown in Figure 9A, it is appreciated that any number of textured regions may be utilized to obtain specific flow results.

In the embodiments of Figures 8A and 9A surface 39 is described having depressions 85 and textured regions 86 and 87. It is to be understood that the surface of diaphragm 40 may also include depressions and/or textured regions in order to achieve similar results. It is further understood that a combination of depressions and/or textured regions may be formed within surface 39 and diaphragm 40 in order to achieve a desired flow control system.

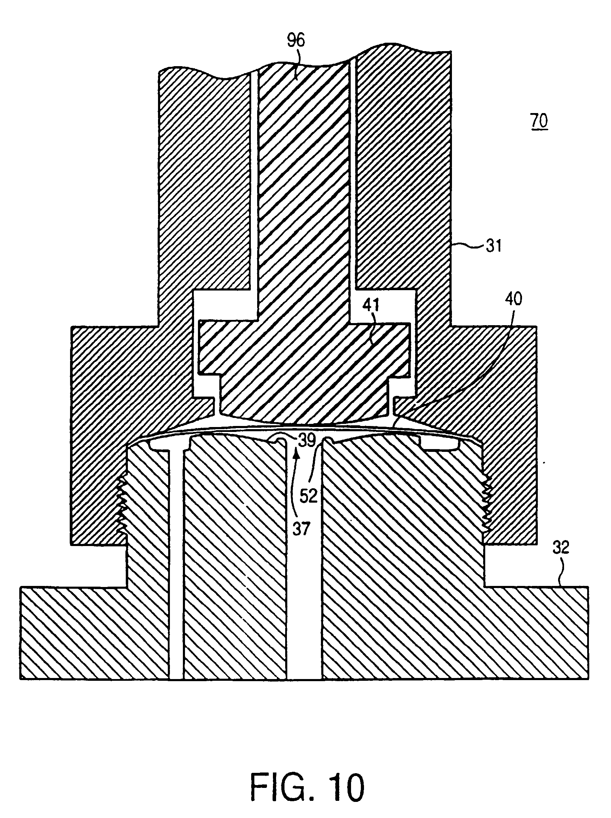

Figure 10 illustrates a variation to the embodiment disclosed in Figure 7. As shown, valve assembly 70 includes a protuberance 52 that forms a boundary around inlet opening 37. It is appreciated by those of ordinary skill in the art that the control valves depicted in Figures 3A and 5A are not intended to act as shutoff valves, but are specifically designed to meter a fluid flow through their respective valve assemblies. In the embodiment of Figure 10, protuberance 52 is included to provide valve assembly 70 with a means to shut off flow through the valve: The fluid flow control method of valve assembly 70 is implemented in the same manner as the valve assemblies depicted in Figure 7. However, in valve assembly 70, when diaphragm 40 engages with protuberance 52, fluid flow through the assembly is shut off. The protuberance may be integrally formed with or machined into lower body assembly 32. Practitioners in the art will appreciate that a number of other valve seat and engagement designs may be used in implementing the invention. By way of example, in lieu of integrally forming the protuberance or valve seat with lower valve assembly 32, a polymer or metal valve seat insert may be disposed within inlet opening 37. In addition, it is understood that the size and shape of the structure may vary depending upon the particular use or application.

In the foregoing description, a control valve has been described wherein a fluid flow is metered by incrementally engaging a thin, flexible diaphragm along the surface of a valve body such that the fluid flow resistance between the diaphragm and surface is varied. It is important to note that the fluid flow into and out of the valve assemblies depicted in the foregoing embodiments may be reversed whereby fluid flows into cavity 34 through passage 35 and out of the cavity through passage 36.

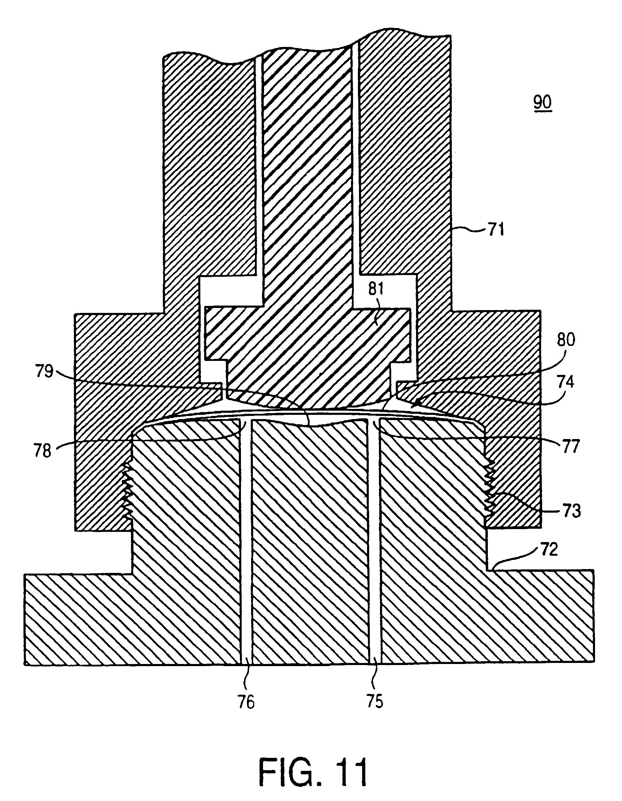

With reference to Figure 11, yet another embodiment of the present invention is shown having inlet and outlet passages 75 and 76. As illustrated in Figure 11, the valve assembly 90 includes a lower body assembly 72 containing inlet passage 75 and outlet passage 76 that lead into and out of a cavity 74 disposed between the lower body assembly 72 and upper body assembly 71. The inlet and outlet passages 75 and 76 communicate with cavity 74 at an inlet opening 77 and an outlet opening 78, respectively. Disposed between inlet and outlet openings 77 and 78 is a curved surface 79 which defines the lower wall of cavity 74. A flexible diaphragm 80 is disposed within cavity 74 and is secured between upper and lower body assemblies 71 and 72. A fluid flow passing through valve assembly 90 is controlled by incrementally engaging or disengaging diaphragm 80 against curved surface 79 to thereby vary the fluid flow resistance between diaphragm 80 and surface 79. In the embodiment of Figure 11, a plunger 81 is provided within upper body assembly 71 to adjust the position of diaphragm 80. Note also, that upper and lower body assemblies 71 and 72 are attached via threaded members 73.

Thus far, a number of embodiments of the present invention have been disclosed demonstrating a new methodology of controlling a fluid flow through a valve. In each of the embodiments, a plunger assembly has been disclosed as the means for engaging the diaphragm against the lower body assembly contact surface. Practitioners in the art will appreciate that a multitude of other engagement devices may be used in implementing the invention. For example, in lieu of using a plunger assembly, pressurized air may be used as the engagement means.

It is appreciated that the methods and apparatus of the present invention may be used in a variety of technologies. It is further understood that the relative dimensions, geometric shapes, materials and process techniques set forth within the specification are exemplary of the disclosed embodiments only. Whereas many alterations and modifications to the present invention will no doubt become apparent to a person ordinarily skilled in the art having read the foregoing description, it is to be understood that the particular embodiments shown and described by way of illustration are in no way intended to be limiting. Therefore, reference to the details of the illustrated diagrams is not intended to limit the scope of the claims which themselves recite only those features regarded as essential to the invention.

## Claims

1. A valve assembly comprising:
a body having a cavity, an inlet passage and an outlet passage wherein said inlet and outlet passages permit a fluid flow into an out of said cavity through a first opening and a second opening, respectively, said body having a substantially continuous surface disposed between said first and second openings;
a diaphragm disposed within said cavity; and
means operatively associated with said diaphragm for incrementally engaging said diaphragm along said surface to vary the fluid flow resistance between said surface and said diaphragm to control said fluid flow through said cavity.

2. The assembly of claims 1 wherein said surface is curved.

3. The assembly of claims 1 wherein said surface is conical.

4. The assembly of claim 1 wherein said surface is textured to provide a resistance to said fluid flow when said diaphragm engages along said surface.

5. The assembly of claim 1 wherein said surface is textured to provide a variable resistance to said fluid flow as said diaphragm engages along said surface.

6. The assembly of claim 1 wherein at least one depression is formed within said surface.

7. The assembly of claim 1 wherein at least one raised region is formed along said surface.

8. The assembly of claim 1 wherein said means operatively associated with said diaphragm for forcibly engaging said flexible member along said curved surface comprises a pressurized air.

9. The assembly of claim 1 wherein said first opening is bounded by a protuberance.

10. The assembly of claim 9 wherein said means operatively associated with said diaphragm forcibly engages said diaphragm against said protuberance to shut off said fluid flow through said first opening.

11. A valve assembly comprising:
an upper body and a lower body having a cavity disposed therein;
an inlet passage and an outlet passage disposed within said lower body to permit a fluid flow into and out of said cavity through a first port and a second port, respectively;
a substantially continuous first surface disposed between said first and second ports;
a recess disposed substantially around said first surface, said second port opening into said recess;
a flexible member having a second and third surface, said flexible member being disposed within said cavity; and
means operatively associated with said flexible member for incrementally engaging said second surface along said first surface to regulate said fluid flow through said cavity.

12. The assembly of claim 11 wherein at least one depression is formed within in said first surface.

13. The assembly of claim 11 wherein at least one raised region is formed along said first surface.

14. The assembly of claim 11 wherein said second surface is textured to provide a resistance to said fluid flow when said second surface engages along said first surface.

15. The assembly of claim 11 wherein said second surface is textured to provide a variable resistance to said fluid flow as said second surface engages along said first surface.

16. The assembly of claim 11 wherein at least one depression is formed within in said second surface.

17. The assembly of claim 11 wherein at least one raised region is formed along said second surface.

18. The assembly of claim 11 wherein said first port is bounded by a protuberance.

19. The assembly of claim 18 wherein said means operatively associated with said flexible member forcibly engages said flexible member against said protuberance to shut off said fluid flow through said first port.

20. A method for controlling a fluid flow through a valve cavity having a substantially continuous surface disposed between an inlet and outlet opening, said method comprising the step of:
a) incrementally engaging a flexible member along said surface to vary the fluid flow resistance between said flexible member and said curved surface.
